# EUROPEAN PATENT APPLICATION

(11) **EP 4 657 297 A1**
(43) Date of publication of application: **03.12.2025**
(21) Application number: 25178718.0
(22) Date of filing: 26.05.2025
(51) Int. Cl.: G06F 21/60, G06F 21/62, H04N 1/44, H04N 23/60

(54) **INFORMATION PROCESSING APPARATUS, INFORMATION PROCESSING METHOD, AND PROGRAM**

(30) Priority: 28.05.2024 JP 2024086190
(71) Applicant: CANON KABUSHIKI KAISHA, Tokyo 146-8501 (JP)
(72) Inventor: ANDO, Yoshito, Tokyo, 146-8501 (JP)
(74) Representative: TBK

(57) **Abstract**

Whether Image capturing is performed in compliance with the rules established by an authorization source is to be proved. An information processing apparatus (200) according to the present disclosure obtains approval information indicating that an approval has been obtained from an authorization source regarding an act of image capturing, and image capturing rule information indicating a rule regarding image capturing (S601, S603), and edits data of an image captured by performing image capturing, so as to conform to the rule (S713), in a case where image capturing in compliance with the rule is not performed in a state where the approval information has been obtained (S710).

## Description

### BACKGROUND

### Field

The present disclosure relates to information processing techniques in authorized image capturing.

### Description of the Related Art

In recent years, due to the spread of video sharing sites, smartphones, low-cost and high-performance image capturing apparatuses, etc., a demand for video production by individuals, such as vlogs (video blogs), has been increasing. Examples of video production include content involving captured images obtained through image capturing during travel or dining out, or captured images obtained through image capturing of pets or everyday life. These types of image capturing may occur in public places, including commercial facilities such as restaurants or theme parks. In image capturing in public places, consideration for those around is necessary, such as observing rights of portrait and etiquette. Japanese Patent Laid-Open No. 2024-6289 (hereinafter referred to as "Patent Literature 1 ") discloses a technology for preventing the uploading of image data containing inappropriate parts to social networking services.

### SUMMARY

However, the technology disclosed in Patent Literature 1 (hereinafter referred to as the "prior art") is to make a definitive determination using data of an image or location information or the like attached to the data of the image. Therefore, the prior art has the problem that it is not possible to prove that a captured image was taken with the approval of an authorization source, such as an administrator of a commercial facility or the like related to objects subjected to image capturing or locations of image capturing.

In view of the above, an object of the present disclosure is to provide a technology for proving that image capturing is performed in compliance with the rules established by an authorization source.

The present disclosure in its first aspect provides information processing apparatuses as specified in claims 1 to 13.

The present disclosure in its second aspect provides information processing methods as specified in claim 14.

The present disclosure in its third aspect provides programs as specified in claim 15.

Further features of various embodiments will become apparent from the following description of exemplary embodiments with reference to the attached drawings.

### BRIEF DESCRIPTION OF T HE DRAWINGS

Fig. 1 is a block diagram illustrating an example of the hardware configuration of an image capturing apparatus according to the first embodiment;
Fig. 2 is a block diagram illustrating an example of the logical configuration of the image capturing apparatus according to the first embodiment;
Fig. 3 is a diagram illustrating an example of image capturing rules according to the first embodiment;
Fig. 4A and Fig. 4B are diagrams illustrating examples of a display screen that is output to an output device according to the first embodiment;
Fig. 5 is a diagram illustrating an example of a warning display screen that is output to the output device according to the first embodiment;
Fig. 6 is a flowchart illustrating an example of a processing flow in the image capturing apparatus according to the first embodiment; and
Fig. 7 is a flowchart illustrating an example of a flow of a violation detection processing according to the first embodiment.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically.

### (First Embodiment)

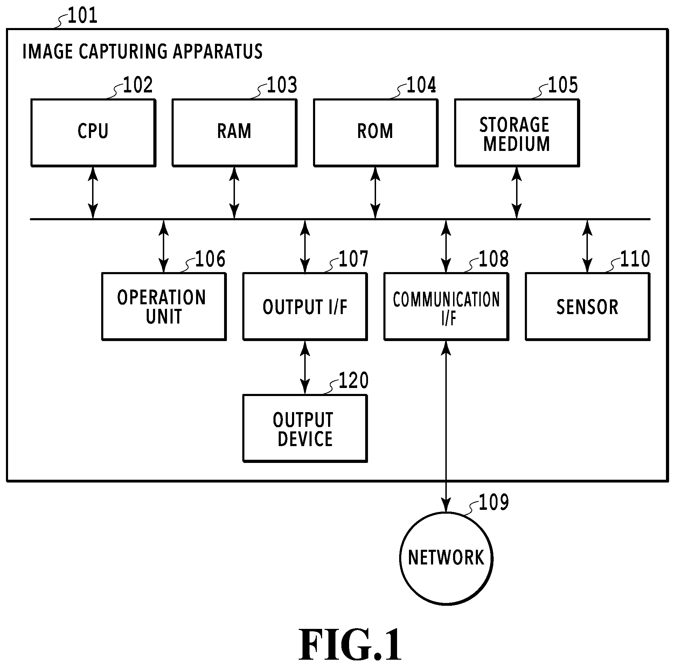

Fig. 1 is a block diagram illustrating an example of the hardware configuration of the image capturing apparatus 101 according to the first embodiment. The image capturing apparatus 101 includes, as its hardware configuration, the CPU 102, the RAM 103, the ROM 104, the storage medium 105, the operation unit 106, the output I/F (interface) 107, the communication I/F 108, the sensor 110, and the output device 120. Each of the units included in the image capturing apparatus 101 as its hardware configuration is communicably connected to one another via a transmission path such as a system bus.

The CPU 102 reads out a program stored in the ROM 104, the storage medium 105, or the like, loads the program into the RAM 103, and executes the program to control the entire image capturing apparatus 101. The ROM 104 is a memory used exclusively for readout, and stores a boot program to be executed by the CPU 102 as the image capturing apparatus 101 is activated, command programs for executing various processes, various types of data, and the like. The ROM 104 is not limited to a memory used exclusively for readout, and may be a readable/writable storage medium such as an HDD (hard disk drive) or an SSD (solid state drive). The RAM 103 is a work memory where programs, data, and the like for the CPU 102 to perform processing are temporarily stored, and various programs and data stored in the ROM 104 and the like are loaded into the RAM 103 by the CPU 102.

The storage medium 105 is a secondary storage area for storing various types of data, and stores the data of captured images obtained by image capturing (hereinafter referred to as "captured image data"). The storage medium 105 is configured with a semiconductor memory or the like such as a memory card. Note that, in the following description, captured images and images encompass both still images and moving images, and a moving image is described as being configured with a plurality of still images (frames) arranged in a time series.

The output I/F 107 is an interface for transmitting control signals to the output device 120, such as a display device or an audio output device, and the CPU 102 controls the output of the output device 120 by transmitting the control signals via the output I/F 107. The output device 120 is a device that outputs visual information or auditory information in a manner that is recognizable by a natural person. The operation unit 106 is configured with switches, buttons, or the like, and outputs an operation signal corresponding to an operation input by a user. The sensor 110 is an image sensor that is configured with a CCD (charge coupled device) or a CMOS (complementary metal-oxide-semiconductor) element or the like that converts an optical image into electrical signals as an output.

The communication I/F 108 is an interface for transmitting and receiving information, data, etc., to and from an external device via the network 109. The image capturing apparatus 101 receives data, etc., from an external device and transmits the data, etc., to the CPU 102 via the communication I/F 108, and transmits data, etc., generated by the CPU 102 to an external device. Hereinafter, a description is given on the premise that the image capturing apparatus 101 is connected to a LAN (local area network) via the communication I/F 108, but the network 109 is not limited to a LAN and may be any type of network. Further, for example, the image capturing apparatus 101 may be indirectly connected to the network 109 via a mobile terminal such as a smartphone.

In a case of analyzing or distributing image data, the image capturing apparatus 101 stores the image data in the RAM 103 and then executes the processing. Further, the image capturing apparatus 101 stores in the RAM 103 the analysis result such as the detection of a representation of a natural person in that image. Hereinafter, a description is given on the premise that the CPU 102 reads out a program for controlling the image capturing apparatus 101 from the ROM 104 or the like, loads the program into the RAM 103, and executes the program, but it is also possible that the program is received from an external device via the communication I/F 108. Further, it is not necessary for all of the processing related to the program to be executed by the CPU 102, and some or all of the processing may be executed by other processing hardware. Examples of processing hardware include an ASIC (application specific integrated circuit), an FPGA (field-programmable gate array), a GPU (graphics processing unit), etc.

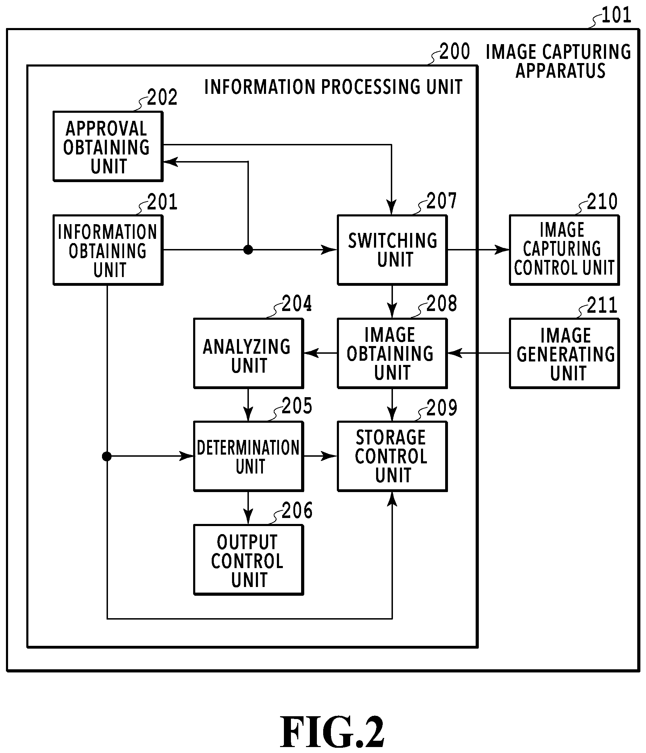

Fig. 2 is a block diagram illustrating an example of the logical configuration of the image capturing apparatus 101 according to the first embodiment. The image capturing apparatus 101 includes, as its logical configuration, the information processing unit 200, the image capturing control unit 210, and the image generating unit 211. The processing of each unit included in the image capturing apparatus 101 as its logical configuration is realized by the CPU 102 loading a computer program stored in the ROM 104 or the like into the RAM 103 and executing the program. The information processing unit 200 executes the later-described predetermined processing during image capturing performed by the image capturing apparatus 101. The information processing unit 200 includes the information obtaining unit 201, the approval obtaining unit 202, the analyzing unit 204, the determination unit 205, the output control unit 206, the switching unit 207, the image obtaining unit 208, and the storage control unit 209.

In the information processing unit 200, the information obtaining unit 201 obtains the verification information, the authorization source identification information, and the image capturing rule information. The verification information is information used in a case of transmitting a verification request to an authorization source. Specifically, the verification information is information that is preset by the authorization source and includes information for password authentication, information for accessing a server apparatus used for the authentication, and the like, and may be any kind of information for obtaining an approval from the authorization source. Further, the authorization source identification information is an ID (identifier) indicating the authorization source, information indicating the name, etc., of the authorization source, or the like, and may be any kind of information that can uniquely identify the authorization source. Further, the image capturing rule information is information indicating the rules related to image capturing (hereinafter referred to as the "image capturing rules"), including information indicating objects, etc., for which permission of image capturing or prohibition of image capturing has been predetermined by the authorization source. The details of the image capturing rules are described later.

For example, first, the user of the image capturing apparatus 101 (hereinafter simply referred to as the "user") uses the image capturing apparatus 101 to capture an image of a barcode, such as a QR code (registered trademark). Next, by decoding the barcode contained as a representation in the captured image obtained by the image capturing, the information obtaining unit 201 obtains the verification information, the authorization source identification information, and the image capturing rule information or information for obtaining the image capturing rule information. Note that the information for obtaining the image capturing rule information (hereinafter referred to as the "rule obtaining information") is information or the like for accessing a server apparatus or the like that stores the image capturing rule information, and may be any kind of information that can be used for obtaining the image capturing rule information. In a case where the information obtaining unit 201 obtains the rule obtaining information, the information obtaining unit 201 uses the rule obtaining information to access the server apparatus or the like that stores the image capturing rule information, thereby obtaining the image capturing rule information. Note that, in this case, the information obtaining unit 201 may use at least one of the verification information and the authorization source identification information to access the server apparatus or the like.

The verification information and the authorization source identification information obtained by the information obtaining unit 201 are transmitted to the approval obtaining unit 202 and the switching unit 207. Further, the image capturing rule information obtained by the information obtaining unit 201 is transmitted to the determination unit 205 and the storage control unit 209. The method for obtaining the verification information, the authorization source identification information, the image capturing rule information, and the rule obtaining information is not limited to the method of decoding a barcode. For example, these pieces of information may be obtained via wireless communication or the like.

Further, the information obtaining unit 201 may obtain the verification information, the authorization source identification information, and the image capturing rule information by the following method. First, the user uses a camera function of a mobile terminal such as a smartphone connected to the image capturing apparatus 101 to capture an image of a barcode, such as a QR code (registered trademark). Next, by decoding the barcode contained as a representation in the captured image obtained by the image capturing, the mobile terminal obtains the verification information, the authorization source identification information, and the image capturing rule information or the rule obtaining information, and transmits these to the image capturing apparatus 101. Next, the information obtaining unit 201 receives the verification information, the authorization source identification information, and the image capturing rule information or the rule obtaining information transmitted from the mobile terminal, thereby obtaining these pieces of information.

In a case where a mobile terminal obtains the rule obtaining information, the information obtaining unit 201 uses the rule obtaining information received from the mobile terminal to access a server apparatus or the like that stores the image capturing rule information, thereby obtaining the image capturing rule information. In this case, the mobile terminal may use the rule obtaining information to access the server apparatus or the like that stores the image capturing rule information, thereby obtaining the image capturing rule information, and transmit the obtained image capturing rule information to the image capturing apparatus 101. Furthermore, in this case, the mobile terminal may use at least one of the verification information and the authorization source identification information to access the server apparatus.

In the information processing unit 200, the approval obtaining unit 202 uses the verification information and the authorization source identification information transmitted from the information obtaining unit 201 to make an approval request to the authorization source, for example, by transmitting the approval request to a server apparatus used for the authentication. The server apparatus used for the authentication receives the approval request from the image capturing apparatus 101 and performs password authentication or the like to transmit information indicating the approval result of the approval request (hereinafter referred to as the "approval information") to the image capturing apparatus 101, and the approval obtaining unit 202 obtains this piece of information. The password authentication is performed, for example, by a general public key cryptosystem. The approval information obtained by the approval obtaining unit 202 is transmitted to the switching unit 207.

In the information processing unit 200, the image obtaining unit 208 obtains the captured image data. The details of the image obtaining unit 208 are described later. The captured image data obtained by the image obtaining unit 208 is transmitted to the analyzing unit 204 and the storage control unit 209.

In the information processing unit 200, the analyzing unit 204 analyzes the captured image data transmitted from the image obtaining unit 208, and outputs information (hereinafter referred to as the "analysis information") indicating the result of the analysis (hereinafter referred to as the "analysis result"). Specifically, through the analysis, the analyzing unit 204 specifies the type of object contained as a representation in the captured image, the coordinates indicating the position of the representation of the object in the captured image, etc., and outputs analysis information indicating the result of the specification as the analysis result. The analysis information output by the analyzing unit 204 is transmitted to the determination unit 205. For example, the analyzing unit 204 analyzes the captured image data through image recognition using a learned model obtained as a result of machine learning, or pattern matching or the like. The method for analyzing the captured image data by the analyzing unit 204 may be any method capable of identifying an object contained as a representation in the captured image.

In the information processing unit 200, the determination unit 205 uses the information indicating the image capturing rules (the image capturing rule information) transmitted from the information obtaining unit 201 and the analysis information transmitted from the analyzing unit 204 to determine whether or not the captured image contains a representation of an object that violates the image capturing rules. The information (hereinafter referred to as the "determination information") indicating the result of the determination made by the determination unit 205 (hereinafter referred to as the "determination result") is transmitted to the output control unit 206 and the storage control unit 209.

In the information processing unit 200, based on the determination information transmitted from the determination unit 205, the output control unit 206 outputs a warning indicating that the image capturing rules specified in the image capturing rule information obtained by the information obtaining unit 201 (hereinafter simply referred to as the "image capturing rules") have been violated. For example, in a case where the determination result indicated by the determination information indicates that the captured image contains a representation of an object that violates the image capturing rules, the output control unit 206 outputs a signal indicating the warning to the output device 120, such as a display device or an audio output device, via the output I/F 107. The output device 120 outputs an image or light, a voice or alarm sound, or the like corresponding to the warning, so that the warning can be visually or audibly recognized by the user of the image capturing apparatus 101 (hereinafter simply referred to as the "user"), people in the vicinity of the user, or a person corresponding to the authorization source.

The output from the output device 120 is not limited to something that can be recognized visually or audibly, but may be something that can be recognized tactilely through vibration or the like. Further, the destination for the warning output by the output control unit 206 is not limited to the output device 120, and it is also possible that the output control unit 206 outputs information indicating the warning to an external device, such as a server apparatus or a storage device, and causes the external device to store the information as log information.

In the information processing unit 200, the switching unit 207 switches the image capturing mode of the image capturing apparatus 101, based on the verification information and the authorization source identification information transmitted from the information obtaining unit 201 and the approval information transmitted from the approval obtaining unit 202. The image capturing mode includes at least two image capturing modes: a normal image capturing mode and an authorized image capturing mode. The normal image capturing mode is an image capturing mode in which image capturing by the image capturing apparatus 101 is performed in the same manner as image capturing with a general digital camera or a smartphone with a camera function, with no enforcement to comply with the image capturing rules. In contrast, the authorized image capturing mode is an image capturing mode in which image capturing by the image capturing apparatus 101, including still images and moving images, is prohibited until an approval is obtained from the authorization source, and compliance with the image capturing rules is enforced. In a case where the switching unit 207 switches the image capturing mode, the switching unit 207 transmits the mode information indicating the image capturing mode after the switching to the image obtaining unit 208 and the image capturing control unit 210.

The image capturing control unit 210 controls the sensor 110 based on the mode information transmitted from the switching unit 207, thereby causing the sensor 110 to convert an optical image into electrical signals. The electrical signals converted by the sensor 110 are transmitted to the image generating unit 211. The image generating unit 211 uses the electrical signals transmitted from the sensor 110 to generate an image corresponding to the electrical signals, that is, a captured image. The data of the captured image generated by the image generating unit 211 is transmitted to the image obtaining unit 208. The image obtaining unit 208 receives the captured image data transmitted from the image generating unit 211 and thereby obtains the captured image data.

In the information processing unit 200, based on the determination result transmitted from the determination unit 205, the storage control unit 209 outputs the captured image data transmitted from the image obtaining unit 208 to the storage medium 105 or the like, and performs control to save the captured image data in the storage medium 105 or the like. Specifically, in a case where the determination result by the determination unit 205 indicates that a representation of an object that violates the image capturing rules is contained in the captured image, the storage control unit 209 edits the captured image data and saves the edited captured image data in the storage medium 105 or the like. More specifically, for example, the storage control unit 209 edits the captured image data so that the captured image data conforms to the image capturing rules, and saves the edited captured image data in the storage medium 105 or the like.

In the present embodiment, a description is given on the premise that the storage control unit 209 edits captured image data and saves the edited captured image data in the storage medium 105 or the like, but there is not a limitation thereto. For example, it is also possible to adopt a configuration in which, in a case where the determination result made by the determination unit 205 indicates that a representation of an object that violates the image capturing rules is contained in the captured image, the storage control unit 209 does not save the captured image data. Further, in the present embodiment, a description is given on the premise that the storage control unit 209 performs a process of editing the captured image data and a process of saving the captured image data, but it is also possible to adopt a configuration in which the storage control unit 209 is divided into a logical configuration that performs the editing process and a logical configuration that performs the saving process.

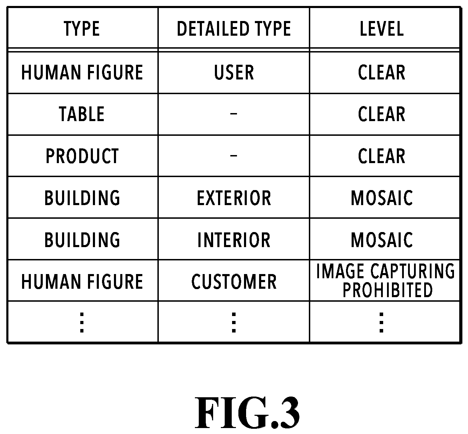

The image capturing rules are described with reference to Fig. 3. Fig. 3 is a diagram illustrating an example of the image capturing rules according to the first embodiment. As illustrated in Fig. 3 as an example, the image capturing rules include item values for the respective items, i.e., "TYPE", "DETAILED TYPE", and "LEVEL", for example. In Fig. 3, "TYPE" represents the type of object that may be captured by the image capturing apparatus 101, and Fig. 3 shows "HUMAN FIGURE", "TABLE", "PRODUCT", and "BUILDING" as examples of an item value corresponding to "TYPE". In the example illustrated in Fig. 3, so-called ordinary names or general names, such as "HUMAN FIGURE" and "TABLE," are used as item values for "TYPE", but any value may be used as long as a comparison can be made with the analysis result output by the analyzing unit 204, and it is also possible that the method for representing the item values for "TYPE" is determined in accordance with the analyzing method used for the captured image data.

Further, in Fig. 3, "DETAILED TYPE" is a more detailed definition of the type of object that may be captured by the image capturing apparatus 101. For example, even if the item value for "TYPE" is the same, such as "HUMAN FIGURE," in a case where a selfie or the like is taken, it is necessary to identify the user and a natural person other than the user who has entered the angle of view of the image capturing apparatus 101 as natural persons distinct from each other. Further, even in a case where the item value for "TYPE" is the same, such as "BUILDING," there may be a case where it is necessary to distinguish between "EXTERIOR" and "INTERIOR" of the building. This also applies to a case where a part of a building, such as a wall or the like, is set as the item value for "TYPE". For example, there are cases where it is necessary to distinguish between an interior wall and an exterior wall. For such cases where it is necessary to further distinguish between item values for "TYPE", item values for "DETAILED TYPE" are used. Note that the item values for "DETAILED TYPE" are not essential, and if there is no need to further distinguish an item value for "TYPE", the item value for "DETAILED TYPE" does not need to be set. Further, "DETAILED TYPE" is not a required item, and in this case, the item values for "TYPE" may be set to a level corresponding to item values for the detailed items, if necessary.

Further, in Fig. 3, "LEVEL" represents the restrictions or conditions for cases of capturing an image of each object. For example, as illustrated in Fig. 3 as an example, a human figure registered in advance, such as the user, may be captured clearly enough to specify the individual. In contrast, image capturing of human figures who happen to be present in the image capturing scene and are not the aforementioned human figure registered in advance is prohibited. In a case where representations of objects whose levels are designated as "IMAGE CAPTURING PROHIBITED," "MOSAIC," or the like are contained in the captured image, the areas corresponding to these representations in the captured image are subjected to an editing process, such as filling-in processing with a predetermined color or mosaic processing. Further, in a case where the captured image is a moving image, the editing process is performed on all frames corresponding to the period in which the image capturing of these objects is performed. Through such an editing process, the captured image is edited into a captured image that conforms to the levels (restrictions or conditions for image capturing) defined in the image capturing rules, and the edited captured image data is saved.

Note that it is also possible to adopt a configuration in which captured image data is not saved in a case where an object whose level is "IMAGE CAPTURING PROHIBITED" is captured. Further, in that case, it is also possible to adopt a configuration in which, in a case where the captured image is a moving image, the data of all frames corresponding to the period in which the image capturing of the object is performed are deleted from the captured image data. Further, as for the processing in a case where the analysis result shows that a representation of an object that does not match any of the objects defined in the image capturing rules is contained in the captured image, a separate rule regarding image capturing may be defined, such as uniformly treating the object as an object that is allowed to be captured.

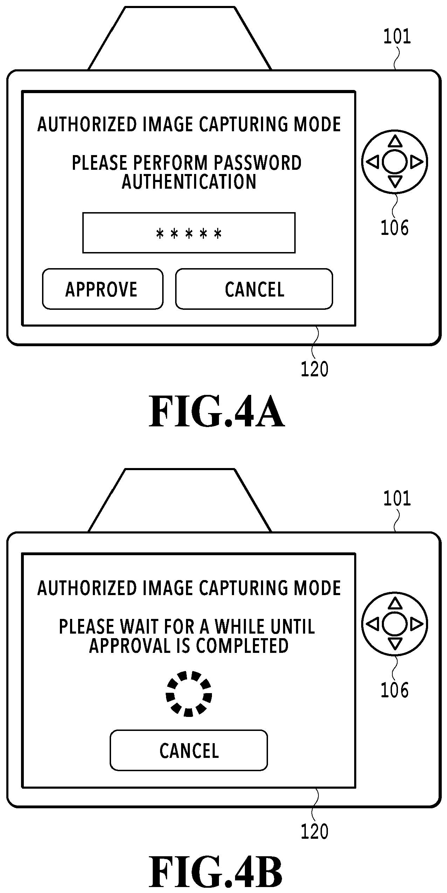

Fig. 4A and Fig. 4B are diagrams illustrating an example of the display screens output to the output device 120 in a case where the approval information, which indicates the approval result from the authorization source, is obtained by the approval obtaining unit 202 according to the first embodiment. Specifically, Fig. 4A illustrates an example of the display screen (the input screen) in a case where the password authentication is performed in the approval obtaining unit 202. The user inputs a password into the input screen illustrated as an example in Fig. 4A, and operates the image capturing apparatus 101 to transmit an approval request including the password, thereby obtaining an approval for image capturing from the authorization source. As a result, the image capturing mode of the image capturing apparatus 101 transitions to the authorized image capturing mode. Further, Fig. 4B illustrates an example of the display screen in a case where the approval obtaining unit 202 causes the image capturing apparatus 101 to connect to the server apparatus used for authentication, thereby allowing the user to obtain an approval for image capturing from the authorization source. In a case where the image capturing apparatus 101 is connected to the server apparatus used for authentication, the authorization source performs approval processing via the server apparatus or the like, and notifies the image capturing apparatus 101 of the approval result. As a result, the image capturing mode of the image capturing apparatus 101 transitions to the authorized image capturing mode.

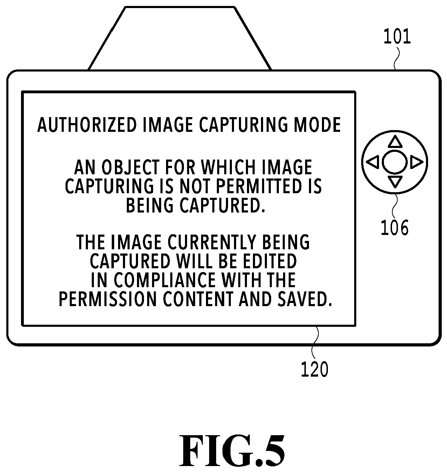

Fig. 5 is a diagram illustrating an example of the display screen (the warning display screen) output to the output device 120 in a case where image capturing that violates the image capturing rules is performed by the image capturing apparatus 101 according to the first embodiment during the authorized image capturing mode. Specifically, the warning display screen illustrated in Fig. 5 is output in a case where image capturing that violates the image capturing rules is being performed by the image capturing apparatus 101 during the authorized image capturing mode. For example, the warning display screen is output in a state where the output of a live view display, etc., is stopped. The warning display screen is output by instantly analyzing the data of a captured image obtained by image capturing using the image capturing apparatus 101 and determining whether or not the image capturing rules are violated. By the warning display screen being output to the output device 120, the user is able to know in real time that he or she is capturing an image of an object that is not permitted under the image capturing rules. Further, with the warning display screen being output to the output device 120, the user is able to recognize in real time that some or all of the data of the image being captured will be edited and saved, or that some or all of the data will not be saved. **In** the above-described example, the image capturing apparatus 101 outputs the warning display screen to the output device 120 to warn the user that image capturing that violates the image capturing rules is being performed, but the method for the warning is not limited to this.

For example, the image capturing apparatus 101 may output the warning by changing the emission pattern or emission color of a light-emitting device, such as a tally lamp installed in the image capturing apparatus 101 as the output device 120. Further, for example, the image capturing apparatus 101 may output the warning by outputting a warning sound, audio guidance, or the like from a speaker installed in the image capturing apparatus 101 as the output device 120. Further, for example, the image capturing apparatus 101 may transmit information indicating the warning to a mobile terminal such as a smartphone connected to the image capturing apparatus 101, so that the warning is output by the mobile terminal. Further, the image capturing apparatus 101 may perform the warning using a combination of two or more of the multiple warning methods described above. In a case where the warning is output using a light-emitting device such as a tally lamp or a speaker, not only the user but also natural persons present in the vicinity of the user, as well as the administrator or the like who is the authorization source, can be made aware that image capturing is being performed in violation of the image capturing rules.

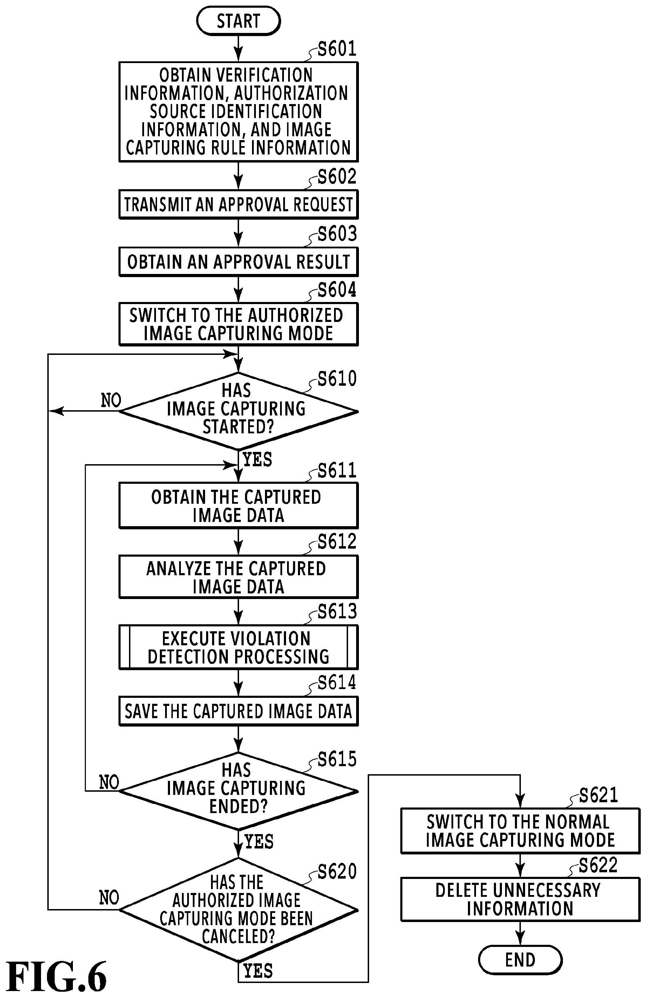

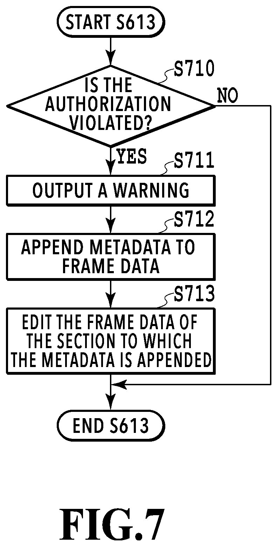

The operation of the image capturing apparatus 101 is described with reference to Fig. 6 and Fig. 7. Note that the processing of the flowcharts described below is realized by the CPU 102 executing a computer program that realizes each unit included in the image capturing apparatus 101 as its logical configuration illustrated in Fig. 2. Further, some or all of the processes in the flowcharts described below may be executed by processing hardware. Further, in the following description, the symbol "S" stands for a step (a process).

Fig. 6 is a flowchart illustrating an example of the processing flow in the image capturing apparatus 101 according to the first embodiment. First, in S601, the information obtaining unit 201 obtains the verification information, the authorization source identification information, and the image capturing rule information. Note that, in a case where the verification information, the authorization source identification information, and the image capturing rule information cannot be obtained in S601, specifically, for example, in a case where the read barcode is not for obtaining an approval for image capturing, the image capturing apparatus 101 may end the flowchart processing illustrated in Fig. 6. Further, in this case, the image capturing apparatus 101 may perform control to prevent the user from capturing an image using the image capturing apparatus 101. Next, in S602, the approval obtaining unit 202 transmits an approval request to the server apparatus used for authentication using the verification information and the authorization source identification information obtained in S601. Next, in S603, the approval obtaining unit 202 obtains the approval information indicating the approval result for the approval request transmitted in S602.

Next, in S604, the switching unit 207 switches the image capturing mode of the image capturing apparatus 101 to the authorized image capturing mode, based on the verification information and the authorization source identification information obtained in S601 and the approval information obtained in S603. Next, in S610, the image capturing control unit 210 determines whether or not image capturing by the image capturing apparatus 101 has started, for example, by determining whether or not the recording button of the image capturing apparatus 101 has been pressed. In a case where it is determined in S610 that recording has not started, the image capturing apparatus 101 returns to the process of S610 and waits until it is determined in S610 that recording has started.

In a case where it is determined in S610 that recording has started, in S611, the image obtaining unit 208 obtains the captured image data obtained by image capturing using the image capturing apparatus 101. Specifically, in a case where it is determined in S610 that recording has started, the image capturing control unit 210 controls the sensor 110 based on the authorized image capturing mode, thereby causing the sensor 110 to convert the optical image into electrical signals and output the electrical signals. Further, the image generating unit 211 generates the captured image based on the electrical signals output from the sensor 110, and outputs the data of the generated captured image. The image obtaining unit 208 receives the data of the captured image output from the image generating unit 211, thereby obtaining the data of the captured image. After S611, in S612, the analyzing unit 204 analyzes the captured image data obtained in S611 to specify the type, etc., of an object contained as a representation in the captured image and outputs the analysis information indicating the analysis result of the specified type, etc., of the object. Next, in S613, the image capturing apparatus 101 executes the violation detection processing based on the analysis information output in S612 and the image capturing rule information obtained in S601.

The processing flow of S613 is described with reference to Fig. 7. Fig. 7 is a flowchart illustrating an example of the flow of the violation detection processing according to the first embodiment, and is a flowchart illustrating an example of the flow of the processing in S613 illustrated in Fig. 6. The processing of the flowchart illustrated in Fig. 7 is executed after S612. First, in S710, the determination unit 205 determines whether or not the captured image data obtained in S611 violates the authorized image capturing rules, and outputs the determination information indicating the determination result to the output control unit 206 and the storage control unit 209. Specifically, the determination unit 205 refers to the analysis result specified by the analysis information output in S612 and the image capturing rules specified by the image capturing rule information obtained in S601, and determines whether or not a representation of an object whose image capturing is restricted by the image capturing rules is contained in the captured image.

In a case where it is determined in S710 that the authorized image capturing rules are violated, first, in S711, the output control unit 206 outputs to the output device 120 the warning indicating that image capturing is being performed in violation of the image capturing rules, based on the determination information output in S710. The output control unit 206 may notify the authorization source via a server apparatus or the like that image capturing is being performed in violation of the image capturing rules. Next, in S712, based on the determination information output in S710, the storage control unit 209 appends metadata indicating the violation to the frame data that is determined to violate the image capturing rules in the captured image data obtained in S611. This metadata may include information indicating, for example, the type of object whose image is captured in violation of the image capturing rules, the coordinates indicating the position of the representation of the object in the captured image, the image capturing time, etc. Further, note that the process of S712 is intended to reduce the processing load of the image capturing apparatus 101, and in a case where an editing process such as the mosaic processing on the captured image, deletion processing on a portion of the captured image data, etc., can be executed in parallel, the process of S712 does not need to be executed.

Next, in S713, the storage control unit 209 performs an editing process such as mosaic processing on the frames of the captured image data of the period to which the metadata was appended in S712, thereby editing the frame data of that period. The storage control unit 209 may perform an editing process such as deleting a portion of the frame data of that period from the captured image data. After S713, or in a case where it is determined in S710 that the authorized image capturing rules are not violated, the image capturing apparatus 101 ends the processing of the flowchart illustrated in Fig. 7, that is, the processing of S613 illustrated in Fig. 6.

Returning to Fig. 6, the description of the flowchart is continued. After S613, that is, after the processing of the flowchart illustrated in Fig. 7, in S614, the storage control unit 209 stores the captured image data in the storage medium 105. Specifically, in a case where editing was performed on the frame data in S713, the storage control unit 209 saves the captured image data including the edited frame data. On the other hand, in a case where editing was not performed on the frame data in S713, the storage control unit 209 saves the captured image data obtained in S611. More specifically, for example, in a case where the image capturing mode is the authorized image capturing mode, the storage control unit 209 saves the captured image data including the edited frame data to which the approval information has been added and the captured image data obtained in S611. This makes it possible to prove that the saved captured image data was captured in compliance with the rules established by the authorization source.

Next, in S615, the image obtaining unit 208 determines whether or not the image capturing by the image capturing apparatus 101 has ended, for example, by determining whether or not the recording stop button of the image capturing apparatus 101 has been pressed. In a case where it is determined in S615 that the recording has not ended, the image capturing apparatus 101 returns to the processing of S611 and repeatedly executes the processes from S611 to S615 until it is determined in S615 that the recording has ended. In a case where it is determined in S615 that the recording has ended, in S620, the switching unit 207 determines whether or not the authorized image capturing mode has been canceled. It is also possible to adopt a configuration in which authorized image capturing mode can be cancelled at the user's discretion, or can be cancelled at any timing by the server apparatus or the like used for authentication as well. Further, it is also possible to adopt a configuration in which the cancellation is automatically performed in a case where the image capturing apparatus 101 moves outside the range of authorized image capturing, using location information of the image capturing apparatus 101 or a mobile terminal such as a smartphone connected to the image capturing apparatus 101.

In a case where it is determined in S620 that the authorized image capturing mode has not been canceled, that is, in a case where the authorized image capturing mode is still ongoing, the image capturing apparatus 101 returns to the processing of S610 and waits until the image capturing is resumed. In a case where it is determined in S620 that the authorized image capturing mode has been canceled, first, in S621, the switching unit 207 cancels the authorized image capturing mode and switches the image capturing mode to the normal mode. Next, in S622, the image capturing apparatus 101 deletes various unnecessary information obtained in S601, etc. After S622, the image capturing apparatus 101 ends the processing of the flowchart illustrated in Fig. 6.

According to the image capturing apparatus 101 configured as described above, it is possible to reduce the burden on the user and the authorization source regarding image capturing authorization. Further, with the image capturing apparatus 101, it is possible to prevent the storage of captured image data obtained by image capturing that violates the image capturing rules established by the authorization source. Further, with the image capturing apparatus 101, it is possible to prove that image capturing is performed in compliance with the rules established by an authorization source.

### (Other Embodiments)

In the above-described embodiment, the description is given on the premise that the information processing unit 200 operates as a logical configuration of the image capturing apparatus 101, but it is also possible that the information processing unit 200 operates as a logical configuration of an information processing apparatus configured with a personal computer, a server apparatus, or the like. In this case, for example, the information processing apparatus obtains the signals indicating a captured image that is output from the image capturing apparatus 101 or the data of the captured image, and executes processing equivalent to that of the information processing unit 200.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

According to the present disclosure, it is possible to prove that image capturing is performed in compliance with the rules established by an authorization source.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An information processing apparatus (200) comprising:
an information obtaining unit (201) configured to obtain approval information indicating that an approval has been obtained from an authorization source regarding an act of image capturing, and image capturing rule information indicating a rule regarding image capturing; and
an editing unit (209) configured to edit data of an image captured by performing image capturing, so as to conform to the rule, in a case where image capturing in compliance with the rule is not performed in a state where the approval information has been obtained.

2. The information processing apparatus according to claim 1,
wherein the information obtaining unit obtains verification information to obtain the approval from the authorization source regarding the act of image capturing, and obtains the approval information using the verification information.

3. The information processing apparatus according to claim 1 or 2,
wherein the editing unit edits data of a frame, among the data of the captured image, for which image capturing in compliance with the rule is not performed, so as to conform to the rule, in a case where the captured image is a moving image.

4. The information processing apparatus according to claim 3,
wherein the editing unit edits the data of the captured image, so as to conform to the rule, by deleting, from the data of the captured image, the data of the frame for which image capturing in compliance with the rule is not performed.

5. The information processing apparatus according to any one of claims 1 to 4,
wherein the image capturing rule information includes at least one of information indicating a type of object for which image capturing is permitted and information indicating a type of object for which image capturing is prohibited.

6. The information processing apparatus according to any one of claims 1 to 5,
wherein, in the image capturing rule information, type information indicating a type of object and condition information indicating a condition for image capturing related to the object are associated with each other, and
wherein the editing unit edits the data of the captured image so that a representation of the object included in the captured image satisfies the condition for image capturing.

7. The information processing apparatus according to any one of claims 1 to 6 further comprising
a switching unit (207) configured to select one of a plurality of processing modes, including a first processing mode in which the data of the captured image is edited in compliance with the rule and a second processing mode in which editing of the data of the captured image is not performed,
wherein the switching unit selects and switches to the first processing mode in a case where the approval information has been obtained.

8. The information processing apparatus according to any one of claims 1 to 7 further comprising
an analyzing unit (204) configured to specify a type of object included as a representation in the captured image by analyzing the captured image,
wherein the editing unit edits the data of the captured image in a case where the captured image includes a representation of an object different from an object for which image capturing is permitted under the rule, based on the rule and a result of the analyzing.

9. The information processing apparatus according to claim 8,
wherein the analyzing unit specifies the type of object included as a representation in the captured image and a position of the representation of the object in the captured image by analyzing the captured image, and
wherein the editing unit edits the data of the captured image in the case where the captured image includes a representation of an different from than an object for which image capturing is permitted under the rule, based on the rule and the result of the analyzing, so that the representation of the object included in the captured image different from an object for which image capturing is permitted under the rule cannot be specified.

10. The information processing apparatus according to claim 9,
wherein the editing unit performs the editing, so that the image cannot be specified, by performing at least one of mosaic processing, filling-in processing, and deletion processing on an area corresponding to the representation of the object included in the captured image other than an object for which image capturing is permitted under the rule.

11. The information processing apparatus according to any one of claims 1 to 10 further comprising
an output unit (206) configured to output a warning indicating a violation of the rule in a case of capturing a representation of an different from than an object for which image capturing is permitted under the rule.

12. The information processing apparatus according to any one of claims 1 to 11 further comprising
a storage control unit (209) configured to store the data of the captured image in a storage medium,
wherein the storage control unit stores, in the storage medium, edited data of the captured image in a case where the data of the captured image is edited to conform to the rule.

13. The information processing apparatus according to any one of claims 1 to 12 further comprising
an apparatus control unit configured to control an image capturing apparatus to disable image capturing by the image capturing apparatus in a case where the approval information has not been obtained.

14. An information processing method comprising:
an information processing step for obtaining approval information indicating that an approval has been obtained from an authorization source regarding an act of image capturing, and image capturing rule information indicating a rule regarding image capturing; and
an editing step for editing data of an image captured by performing image capturing, so as to conform to the rule, in a case where image capturing in compliance with the rule is not performed in a state where the approval information has been obtained.

15. A program for causing a computer to execute the information processing method according to claim 14.
